# EUROPÄISCHE PATENTANMELDUNG

(11) **EP 1 720 055 A2**
(43) Veröffentlichungstag der Anmeldung: **08.11.2006**
(21) Anmeldenummer: 06008985.1
(22) Anmeldetag: 29.04.2006
(51) Int. Cl.: G02B 21/00, G02B 26/10

(54) **Laser-Scanning-Mikroskop**

(30) Priorität: 03.05.2005 DE 102005020541
(71) Anmelder: Carl Zeiss Microlmaging GmbH, 07745 Jena (DE)
(72) Erfinder: Bloos, helmut, 07747 Jena (DE)
(74) Vertreter: Hampe, Holger

(57) **Zusammenfassung**

Laser Scanning-Mikroskop, vorzugsweise mit linienförmiger Abtastung, wobei Beleuchtungslicht mit mindestens einem Galvanometerscanner über die Probe geführt wird,
wobei der Scanner eine mechanische Auslenkungsbegrenzung aufweist, wobei Mittel zur Bestimmung einer Stromerhöhung am vorgesehen sind und bei Erreichen eines Schwellwertes die Betriebsspannung des Scanners ausgeschalten wird bis der Schwellwert unterschritten wird und vorteilhaft eine optische und/oder akustische Anzeigeeinrichtung vorgesehen ist, die das Ein- und Ausschalten des Scanners anzeigt.

## Beschreibung

Die Erfindung betrifft ein Laser Scanning-Mikroskop, vorzugsweise mit linienförmiger Abtastung, wobei Beleuchtungslicht mit mindestens einem einem Galvanometerscanner über die Probe geführt wird.

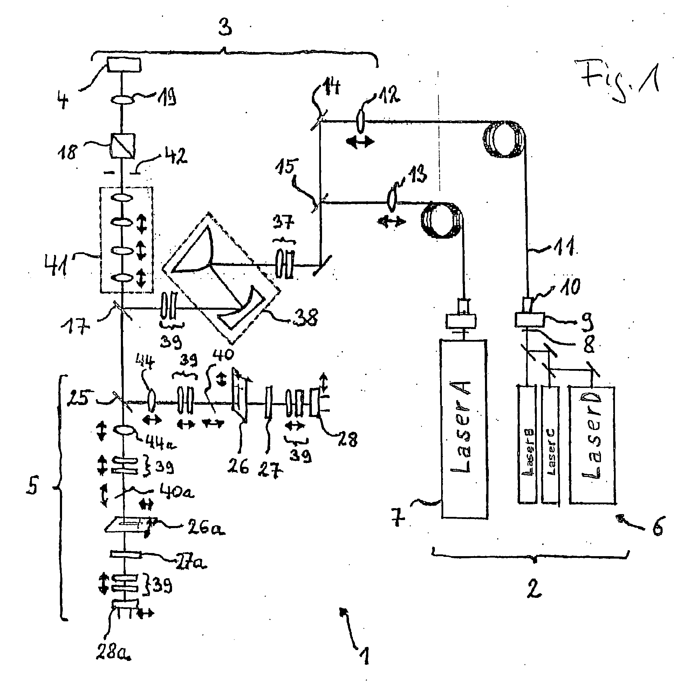

Figur 1 zeigt schematisch ein Laserscanningmikroskop 1, das im wesentlichen aus fünf Komponenten aufgebaut ist: einem Strahlungsquellenmodul 2, das Anregungsstrahlung für die Laserscanningmikroskopie erzeugt, einem Scanmodul 3, das die Anregungsstrahlung konditioniert und zum Scannen über eine Probe geeignet ablenkt, einem zur Vereinfachung nur schematisch gezeigten Mikroskopmodul 4, das die vom Scanmodul bereitgestellte scannende Strahlung in einem mikroskopischen Strahlengang auf eine Probe richtet, sowie einem Detektormodul 5, das optische Strahlung von der Probe erhält und detektiert. Das Detektormodul 5 kann dabei, wie es in Figur 1 dargestellt ist, spektral mehrkanalig ausgeführt sein.
Zur allgemeinen Beschreibung eines punktweise abtastenden Laser Scanning Mikroskopes wird auf DE 19702753A1 verwiesen, die somit Bestandteil der hier vorliegenden Beschreibung ist.
Das Strahlungsquellenmodul 2 erzeugt Beleuchtungsstrahlung, die für die Laserscanningmikroskopie geeignet ist, also insbesondere Strahlung, die Fluoreszenz auslösen kann. Je nach Applikation weist das Strahlungsquellenmodul dazu mehrere Strahlungsquellen auf. In einer dargestellten Ausführungsform werden zwei Laser 6 und 7 im Strahlungsquellenmodul 2 vorgesehen, denen jeweils ein Lichtventil 8 sowie ein Abschwächer 9 nachgeschaltet sind und die ihre Strahlung über ein Koppelstelle 10 in eine Lichtleitfaser 11 einkoppeln. Das Lichtventil 8 wirkt als Strahlablenker, mit dem eine Strahlabschaltung bewirkt werden kann, ohne den Betrieb der Laser in der Lasereinheit 6 bzw. 7 selbst abschalten zu müssen. Das Lichtventil 8 ist beispielsweise als AOTF ausgebildet, das zur Strahlabschaltung den Laserstrahl vor der Einkopplung in die Lichtleitfaser 11 in Richtung einer nicht dargestellten Lichtfalle ablenkt.

In der beispielhaften Darstellung der Figur 1 weist die Lasereinheit 6 drei Laser B, C, D auf, wohingegen die Lasereinheit 7 nur einen Laser A beinhaltet. Die Darstellung ist also beispielhaft für eine Kombination aus Einzel- und Multiwellenlängenlaser, die einzeln oder auch gemeinsam an eine oder mehrere Fasern angekoppelt sind. Auch kann die Ankopplung über mehrere Fasern gleichzeitig erfolgen, deren Strahlung später nach Durchlaufen einer Anpaßoptik durch Farbvereiniger gemischt wird. Es ist somit möglich, verschiedenste Wellenlängen oder -bereiche für die Anregungsstrahlung zu verwenden.

Die in die Lichtleitfaser 11 eingekoppelte Strahlung wird mittels verschieblichen Kollimationsoptiken 12 und 13 über Strahlvereinigungsspiegel 14, 15 zusammengeführt und in einer Strahlformungseinheit hinsichtlich des Strahlprofils verändert.

Die Kollimatoren 12, 13 sorgen dafür, daß die vom Strahlungsquellenmodul 2 an das Scanmodul 3 zugeführte Strahlung in einen Unendlichstrahlengang kollimiert wird. Dies erfolgt jeweils vorteilhaft mit einer einzelnen Linse, die durch Verschiebung entlang der optischen Achse unter Steuerung (einer nicht dargestellten) zentralen Ansteuereinheit eine Fokussierungsfunktion hat, indem der Abstand zwischen Kollimator 12, 13 und dem jeweiligen Ende der Lichtleitfaser veränderbar ist.

Die Strahlformungseinheit, welche später noch eingehend erläutert wird, erzeugt aus dem rotationssymmetrischen, gaußförmig profilierten Laserstrahl, wie er nach den Strahlvereinigungsspiegeln 14, 15 vorliegt, einen zeilenförmigen Strahl, der nicht mehr rotationssymmetrisch ist, sondern im Querschnitt zur Erzeugung eines rechteckig beleuchteten Feldes geeignet ist.

Dieser auch als zeilenförmig bezeichnete Beleuchtungsstrahl dient als Anregungsstrahlung und wird über einen Hauptfarbteiler 17 und eine noch zu beschreibende Zoomoptik zu einem Scanner 18 geleitet. Auf den Hauptfarbteiler wird später ebenfalls noch eingegangen, hier sei lediglich erwähnt, daß er die Funktion hat, vom Mikroskopmodul 4 zurückkehrende Probenstrahlung von der Anregungsstrahlung zu trennen.

Der Scanner 18 lenkt den zeilenförmigen Strahl ein- oder zweiachsig ab, wonach er durch ein Scanobjektiv 19 sowie eine Tubuslinse und ein Objektiv des Mikroskopmoduls 4 in einen Fokus 22 gebündelt wird, der in einem Präparat bzw. in einer Probe liegt. Die optische Abbildung erfolgt dabei so, daß die Probe in einer Brennlinie mit Anregungsstrahlung beleuchtet wird.

Derart im linienförmigen Fokus angeregte Fluoreszenz-Strahlung gelangt über Objektiv und Tubuslinse des Mikroskopmoduls 4 und das Scanobjektiv 19 zurück zum Scanner 18, so daß in Rückrichtung nach dem Scanner 18 wieder ein ruhender Strahl vorliegt. Man spricht deshalb auch davon, daß der Scanner 18 die Fluoreszenz-Strahlung descannt.

Der Hauptfarbteiler 17 läßt die in anderen Wellenlängenbereichen als die Anregungsstrahlung liegende Fluoreszenz-Strahlung passieren, so daß sie über einen Umlenkspiegel 24 im Detektormodul 5 umgelenkt und dann analysiert werden kann. Das Detektormodul 5 weist in der Ausführungsform der Figur 1 mehrere spektrale Kanäle auf, d.h. die vom Umlenkspiegel 24 kommende Fluoreszenz-Strahlung wird in einem Nebenfarbteiler 25 in zwei spektrale Kanäle aufgeteilt.

Jeder spektrale Kanal verfügt über eine Schlitzblende 26, die eine konfokale oder teil-konfokale Abbildung bezüglich der Probe 23 realisiert und deren Größe die Tiefenschärfe, mit der die Fluoreszenz-Strahlung detektiert werden kann, festlegt. Die Geometrie der Schlitzblende 26 bestimmt somit die Schnittebene innerhalb des (dicken) Präparates, aus der Fluoreszenz-Strahlung detektiert wird.

Der Schlitzblende 26 ist noch ein Blockfilter 27 nachgeordnet, das unerwünschte, in das Detektormodul 5 gelangte Anregungsstrahlung abblockt. Die derart abseparierte, aus einem bestimmten Tiefenabschnitt stammende, zeilenförmig aufgefächerte Strahlung wird dann von einem geeigneten Detektor 28 analysiert. Analog zum geschilderten Farbkanal ist auch der zweite spektrale Detektionskanal aufgebaut, der ebenfalls eine Schlitzblende 26a, ein Blockfilter 27a sowie einen Detektor 28a umfaßt.

Die Verwendung einer konfokalen Schlitz-Apertur im Detektormodul 5 ist nur beispielhaft. Natürlich kann auch ein Einzelpunktscanner realisiert sein. Die Schlitzblenden 26, 26a sind dann durch Lochblenden ersetzt und die Strahlformungseinheit kann entfallen. Im übrigen sind für eine solche Bauweise alle Optiken rotationssymmetrisch ausgeführt. Dann können natürlich statt einer Einzelpunktabtastung und -detektion auch prinzipiell beliebige Mehrpunktanordnungen, wie Punktwolken oder Nipkow-Scheibenkonzepte, verwendet werden. Wesentlich ist dann allerdings, daß der Detektor 28 ortsauflösend ist, da eine parallele Erfassung mehrerer Probenpunkte beim Durchlauf des Scanners erfolgt.

In Figur 1 ist zu sehen, daß die nach den beweglichen, d.h. verschieblichen Kollimatoren 12 und 13 vorliegenden Gauß'schen Strahlenbündel über eine Spiegeltreppe in Form der Strahlvereinigungsspiegel 14, 16 vereinigt und bei der gezeigten Bauweise mit konfokaler Schlitzblende anschließend in ein Strahlbündel mit rechteckigem Strahlquerschnitt konvertiert werden. In der Ausführungsform der Figur 1 wird in der Strahlformungseinheit ein Zylinderteleskop 37 verwendet, dem eine Asphäreneinheit 38 nachgeordnet ist, auf das eine Zylinderoptik 39 folgt.

Nach der Umformung liegt ein Strahl vor, der in einer Profilebene im wesentlichen ein rechteckiges Feld ausleuchtet, wobei die Intensitätsverteilung entlang der Feldlängsachse nicht gaußförmig, sondern kastenförmig ist.

Die Beleuchtungsanordnung mit der Asphäreneinheit 38 kann zur gleichmäßigen Füllung einer Pupille zwischen einer Tubuslinse und einem Objektiv dienen. Damit kann die optische Auflösung des Objektivs voll ausgeschöpft werden. Diese Variante ist somit auch zweckmäßig in einem Einzelpunkt oder Multipunkt scannenden Mikroskopsystem, z. B. in einem linien-scannenden System (bei letzterem zusätzlich zu der Achse, in der auf bzw. in die Probe fokussiert wird).

Die z. B. linienförmig konditionierte Anregungsstrahlung wird auf den Hauptfarbteiler 17 gelenkt. Dieser ist in einer bevorzugten Ausführungsform als spektral-neutraler Teilerspiegel gemäß der DE 10257237 A1 ausgeführt, deren Offenbarungsgehalt hier vollumfänglich einbezogen ist. Der Begriff "Farbteiler" umfaßt also auch nichtspektral wirkende Teilersysteme. Anstelle des beschriebenen spektral unabhängigen Farbteilers kann auch ein homogener Neutralteiler (z.B. 50/50, 70/30, 80/20 o.ä.) oder ein dichroitischer Teiler Verwendung finden. Damit applikationsabhängig eine Auswahl möglich ist, ist der Hauptfarbteiler vorzugsweise mit einer Mechanik versehen, die einen einfachen Wechsel ermöglicht, beispielsweise durch ein entsprechendes Teilerrad, das einzelne, austauschbare Teiler enthält.

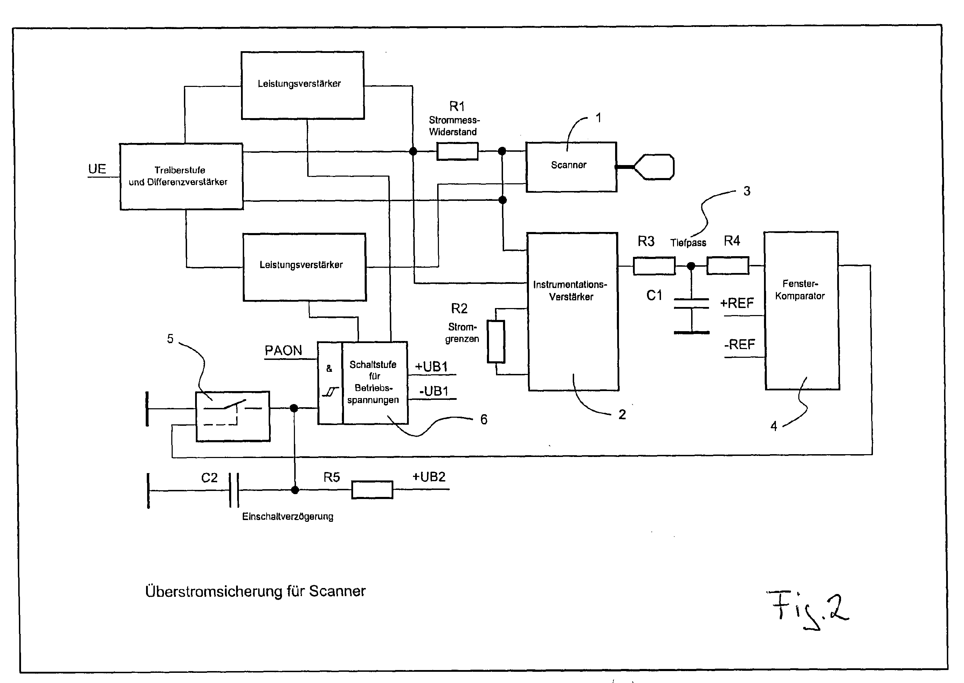

Ist der Scanner 18 als Scanner mit mechanischer Auslenkungsbegrenzung ausgebildet (beispielsweise GSI Lumonics VM500, Manual von 2003, kann eine falsche Einstellung dieser Auslenkungsbegrenzung dazu führen, dass nach der Bestromung des Scanners der Regler des Scanners gegen einen Anschlag arbeitet. Das führt zu einer drastischen Stromerhöhung, die, wenn sie unbemerkt bleibt (was im allgemeinen bei in Geräten eingebauten Scannern der Fall ist), den Scanner nach kurzer Zeit durch Überhitzung zerstört.
Die weitere Erläuterung erfolgt anhand Fig.2 . Scanner 18 aus Fig. 1 ist hier Scanner 1.
Üblicherweise werden Scanner mit einem als Stromtreiber ausgelegten Leistungsverstärker betrieben.
Der Scanner (1), die Treiberstufe und die beiden Leistungsverstärker sind Bestandteil eines an sich bekannten analogen Regelkreises, der in der Abb. 2 nur teilweise dargestellt ist. Der Scanner beinhaltet einen Positionssensor, der ein winkelproportionales Signal liefert, das im erwähnten Regelkreis mit dem Ansteuersignal verknüpft ist. Das so gebildete Summensignal UE wird der Treiberstufe, die als Differenzverstärker ausgeführt ist, zugeführt. Die Treiberstufe verknüpft UE mit dem Differenzsignal, das über R1 gemessen wird und bildet daraus die Ansteuersignale für die Leistungsverstärker, die in bekannter Weise als Brückenverstärker und Stromtreiber geschaltet sind.
Im statischen Zustand tritt an R1 nur eine geringe Differenzspannung auf, die von dem kleinen Haltestrom des Scanners bewirkt wird. Sowie eine Änderung von UE auftritt (Änderung des Ansteuersignals für neue Position), erhöht sich die Ausgangsspannung der Leistungsverstärker (und damit der Scannerstrom), der Scanner dreht sich soweit, bis (durch die Änderung des Positionssignals bewirkt) UE wieder den vorherigen Wert einnimmt. Die Ausgangsspannung der Leistungsverstärker geht in der neuen Position wieder auf den Wert zurück, bei dem der geringe Haltestrom des Scanners aufrechterhalten wird.
Kann die neue Position nicht eingenommen werden, weil beilspielsweise die mechanische Auslenkungsbegrenzung falsch eingestellt ist, so bleibt der hohe Scannerstrom bestehen, der zu einer übermäßigen Erwärmung des Scanners und schließlich zu seiner Zerstörung führt.

Die vorliegende Erfindung bezieht sich darauf, den dort stets vorhandenen Strommesswiderstand zur Realisierung einer Überstromsicherung heranzuziehen.

Der über dem Strommesswiderstand R1 auftretende Spannungsabfall wird mit dem Instrumentationsverstärker (2) auf einen mit dem nachfolgenden Fensterkomparator (4) auswertbaren Spannungswert verstärkt. Die Verstärkung (und damit das Strommaximum) wird durch den Wert von R2 festgelegt. Der Tiefpass (3) R3, C1, R4 verhindert ein Ansprechen des Komparators durch kurzzeitige Stromspitzen, wie sie z. B. bei der Richtungsumkehr des Scanners (1) während des Scan-Betriebes auftreten. Nur wenn ein länger anhaltender großer Stromwert festgestellt wird, der zu einem Spannungswert führt, der eine der beiden Referenzspannungen +REF oder -REF überschreitet, schaltet der Ausgang des Komparators den Analogschalter (5) ein. Dadurch wird C2 entladen und die Schaltstufe für die Betriebsspannungen (6) der Leistungsverstärker schaltet die Betriebsspannungen +UB1 und -UB1 ab. Da jetzt der Fehlerfall "zu großer Strom" nicht mehr vorliegt, schaltet der Komparator zurück und der Analogschalter wird ausgeschaltet. C2 kann sich über R5 von der Betriebsspannung +UB2 aufladen (Einschaltverzögerung) und schaltet nach Erreichen der Schwellspannung des Schmitt-Trigger-Einganges die Betriebsspannungen der Leistungsverstärker wieder ein.
Da der Scanner nur kurzzeitig mit dem erhöhtem Strom des Fehlerfalles betrieben wird, ist eine thermische Überlastung ausgeschlossen. Das periodische Ein- und Ausschalten des Scanners wird als periodisches "Klicken" hörbar, wodurch ein Benutzer auf den Fehlerfall aufmerksam gemacht wird. Der Fehlerfall kann auch über eine blinkende LED angezeigt werden oder durch Setzen eines Error-Bit's in einer Status-Abfrage.
Die Erfindung ist vorteilhaft bei unterschiedlichen Scanmikroskopen, auch bei mehr als einem verwendeten Scanner, anwendbar.

## Patentansprüche

1. Laser Scanning-Mikroskop , vorzugsweise mit linienförmiger Abtastung, wobei Beleuchtungslicht mit mindestens einem Galvanometerscanner über die Probe geführt wird,
wobei der Scanner eine mechanische Auslenkungsbegrenzung aufweist, wobei Mittel zur Bestimmung einer Stromerhöhung am vorgesehen sind und bei Erreichen eines Schwellwertes die Betriebsspannung des Scanners ausgeschalten wird bis der Schwellwert unterschritten wird.

2. Laser Scanning-Mikroskop nach Anspruch 1, wobei eine optische und/oder akustische Anzeigeeinrichtung vorgesehen ist, die das Ein- und Ausschalten des Scanners anzeigt.

3. Anordnung zur Ansteuerung eines Galvanometerscanners, insbesondere nach Anspruch 1 oder 2 ,
wobei der Scanner eine mechanische Auslenkungsbegrenzung aufweist, wobei Mittel zur Bestimmung einer Stromerhöhung am vorgesehen sind und bei Erreichen eines Schwellwertes die Betriebsspannung des Scanners ausgeschalten wird bis der Schwellwert unterschritten wird.
